# EUROPEAN PATENT SPECIFICATION

(11) **EP 1 489 823 B1**
(45) Date of publication and mention of the grant of the patent: **27.05.2009**
(21) Application number: 03013877.0
(22) Date of filing: 19.06.2003
(51) Int. Cl.: H04M 1/725, H04N 7/15, H04N 7/14

(54) **Media stream mixing**
Mischen von Medien
Mélanger des flux multimédia

(43) Date of publication of application: 22.12.2004
(73) Proprietor: Sony Ericsson Mobile Communications AB, 221 88 Lund (SE)
(72) Inventor: Norhammer, Björn, 182 74 Stocksund (SE); Lindquist, Tobias, 172 65 Sundbyberg (SE)
(74) Representative: Dahnér, Christer

(56) References cited:
- WO-A-01/31900
- US-A1- 2001 048 463

## Description

### TECHNICAL FIELD OF THE INVENTION

The present invention relates to real time mixing of at least two media streams in a portable communication device. More particularly, it relates to a method and a device for real time mixing of at least two media streams, for providing a real time transmitted output media stream.

### DESCRIPTION OF RELATED ART

Most third generation mobile terminals will have a Video Telephony (VT) application implemented, which is based on the 3GPP specification 324M. This VT-application enables a person-to-person connection with communication including real-time voice and video information. These applications comprise recording and venerating of one single video stream containing both audio and image information.

If it were possible to combine two different media streams in a portable communication device, a number of attractive functions could be provided such as exchanging voice from one stream with voice from another, replacing mage information of one stream with image information of the other etc.

One interesting way of using VT would be to use so called "show and tell", This means that when playing a recorded video including audio and image information, voice (audio) is simultaneously added to this stream.

Furthermore, some consumers might be concerned about apparently being filmed at locations where it may be inappropriate or where the other party is not allowed to see the location because of security reasons. The apparent real time movie may for instance be a combination of two different movies, one of which shows the location and the other shows the consumer.

From US 2001/0048463 A1 a method and system are known for providing and transmitting alternative video data during interruptions in video transmissions, comprising transferring a decoded file into a memory which is viewed by a receiver in lieu of a terminated transmission.

A distributed communication network is disclosed in WO 01/31900 A2 including one or more telephony communication devices having programmable functionality, comprising generation of a specific tone corresponding to a telephony event.

This invention concerns how to increase the usage of a mobile VT application and how to be able to handle integrity issues when used in a video phone.

There is thus a need for a method and a device that can provide an output media stream that is based on two separate input streams, where at least one is a real-time stream.

### SUMMARY OF INVENTION

The object of the invention is to provide a method and a portable communication device according to the appended claims.

### BRIEF DESCRIPTION OF THE DRAWINGS

The present invention will now be described in more detail in relation to the enclosed drawings, in which:
fig. 1 shows a method for providing in real time a synchronized output media stream that is transmitted from a portable communication device, where said output media stream is a mixture of a first real time media stream and a second media stream; and
fig. 2 illustrates a portable communication device for providing the synchronized output media stream that is generated according to the method in fig. 1

### DETAILED DESCRIPTION OF THE EMBODIMENTS

The present invention relates to the forming a synchronized output media stream to be transmitted during a communication session from a portable communication device.

The features according to this preferred embodiment will be available in the 3G-324M application of communication devices. In order to achieve this the flexibility of the H.245 protocol will be utilized together with updated SW/HW architecture.

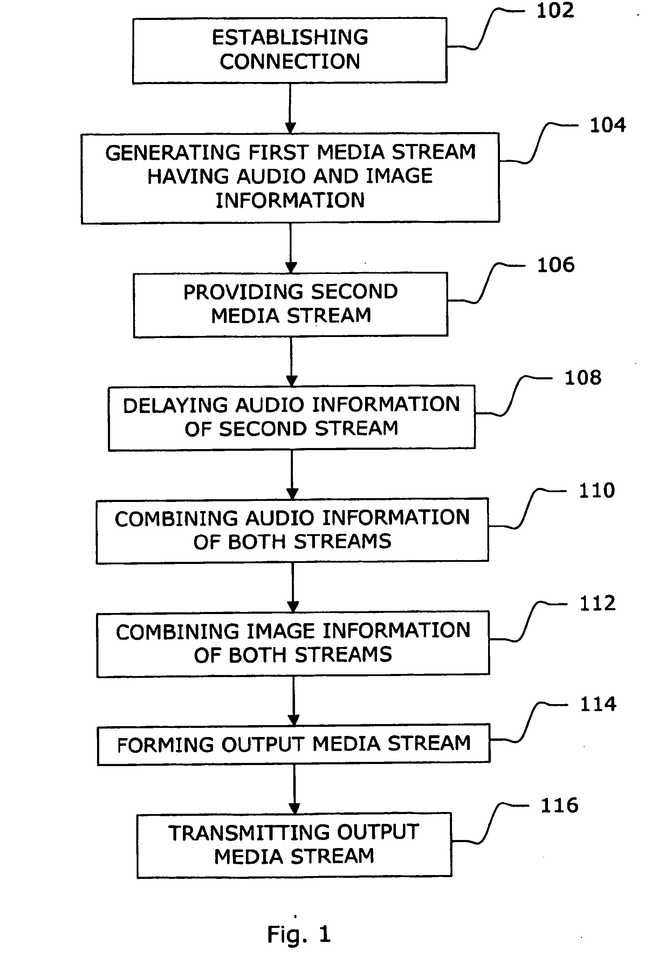

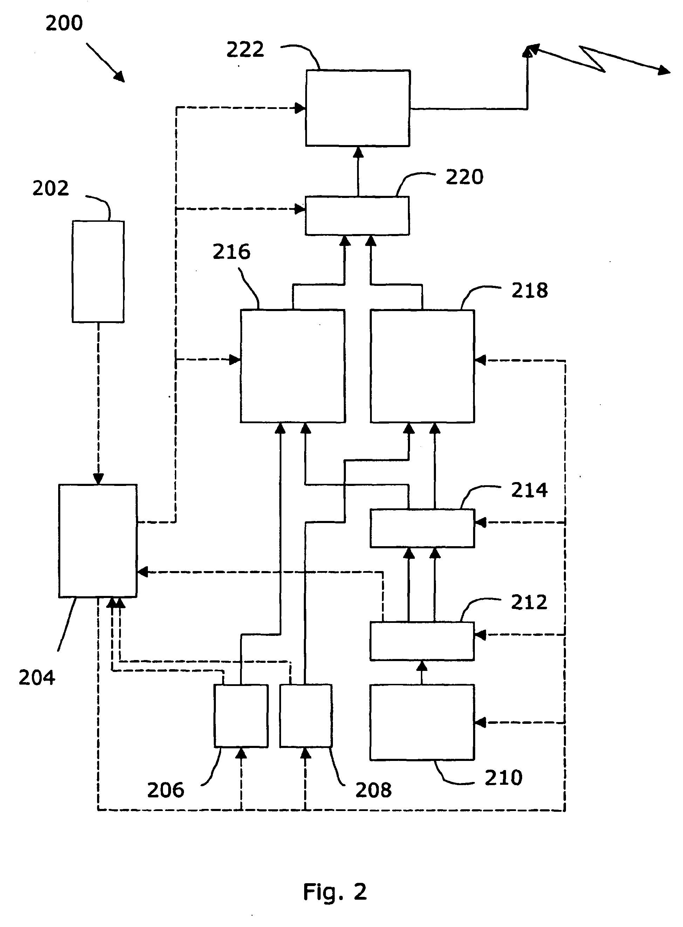

Reference will now be given to figs. 1 and 2, illustrating a method for providing a synchronized output media stream in real time that is transmitted from a portable communication device and a portable communication device according to the present invention, respectively.

According to this preferred embodiment said method starts by establishing a connection, step 102, between the portable communication device 200 and another communication device, with which the user of the portable communication device would like to establish a VT communication session. This is done through the user selecting a VT-session via a user input interface 202, based on the selection a control unit 204 makes a transmitting unit 222 set up a VT-session with another device. Generating of the first media stream having both audio and image information, i.e. signals of a first and second type, step 104, is then performed by an audio generating unit 206 and an image generating unit 208 both controlled by the control unit 204. This is done through recording image via camera comprised in the image generating unit 208 and audio via a microphone comprised within the audio generating unit 206.

According to this embodiment the first media stream comprises both audio and image information. Now, providing of the second media stream, step 106, is performed by obtaining said media stream from a memory unit 210. Also this is done through the control of the control unit depending on user input. This memory unit is in this preferred embodiment an internal memory comprised included in the portable communication device, 200. As the second media stream contains multiplexed audio and image information, this stream is demultiplexed to separate these two types of signals. This is performed in a demultiplexing unit 212. The demultiplexing unit 212, performs decoding of image formats in order to obtain a format that is suitable for mixing according to this preferred embodiment. A suitable format is for instance the YUV format. This demultiplexing unit 212 further decodes the audio information to a suitable format. This audio format is for example the PCM format The demultiplexing unit 212 further has a bit-rate converting capability, for converting the bit-rate of audio and/or image information to facilitate the steps of combining information of the same type in combining units 216 and 218.The first and second media streams now contain decoded separated types of signals, containing audio and image information respectively.

The above mentioned demultiplexing and decoding of the different signal types, according to the present invention, consumes different amounts of time. In this preferred embodiment the image processing path requires more time than the audio processing path, which is the general case. For obtaining a subsequent output media stream comprising synchronized audio and image information from the second stream, audio information from this second stream is subjected to delaying, step 108, by a delaying unit 214. The amount of delay used is further determined by the control unit, based on the difference in time of the different processing steps. However, the amount of delay used is also dependent on any time difference between audio and image information of the first media stream. The delaying unit 214, effective on the second media stream, hence also has to compensate for a portion of subsequent synchronizing by a multiplexing unit 220, effective on the output media stream, which portion is due to any timing difference between audio and image information within the first media stream.

The separated types of information, i.e. audio and image are now subjected to combining. Audio information from both streams are combined, step 110, by a first combining unit 216. A second combining unit 218 is similarly combining image information from both streams, step 112. The combining of audio information is performed by superposing audio information of the first stream on audio information of the second stream. This combining further includes weighting the properties of the audio information from the first stream and the audio information from the second stream. This encompasses varying the proportion of audio information from one stream in relation to the proportion of audio information from the other stream.

According to this preferred embodiment of the present invention the first combining unit 216 includes coding of the combined audio information to a suitable format such as AMR.

For image information the combining unit 218 combines image information from the first stream with image information from the second stream by a process called a-blending, which is well known to a person skilled in the art and will therefore not be further discussed here. This combining of image information however includes weighting properties of the image information from the first stream and the second stream. Similar to the combing of audio information by the first combining unit 216 the weighting properties within the second combining unit 218 includes varying the proportions of image information from one stream in relation to the proportion of image information from the other stream.

Weighting properties of audio and image information is dependent on user input data obtained from the user via the user input interface 202.

Moreover, according to said preferred embodiment the second combining unit 218, comprises coding the combined image information to a suitable format, such as MPEG-4.

The steps of combining information of the same type, from the two different streams, is now followed by forming the output media stream, step 114, by the multiplexing unit 220.

This multiplexing unit 220 further contains synchronizing capabilities in order to achieve internal synchronizing between the two types of information from the first media stream, i.e. to synchronize the audio with the image information from this stream. This synchronizing takes into consideration any time difference between the audio information and the image information within the first stream. However, it also respects any time difference between the time required for audio information to pass the combining unit, on the one hand, and the time required for image information to pass the combining unit, on the other hand. These required durations will typically depend on the presence of audio and/or image information in the media streams being combined.

Upon having formed the output media stream including information from the first media stream and synchronized information of the second stream, this combined multiplexed output stream is subjected to real time transmitting, step 116, by the transmitting unit 222.

With reference to portable communication device as shown in fig. 2, it is seen that the control unit 204 is connected to all the other performing units, in order to control them, upon receiving user input data via the user input data interface 202. The step of generating the first media stream, step 104, providing the second media stream, step 106 and the steps of combining audio information, step 110, and combining image information, step 112, require user input data.

Furthermore, in order to delay the correct type of information, either audio or image information, feedback signaling is included between the second combing unit 212 and the control unit 204 to adjust the delay subject to the correct type of information in the delaying unit 214.

The invention can be varied in many ways for instance:

The first media stream can comprise only image information, only audio information or a combination of both. Also the second media stream can comprise only image information, only audio information or a combination of both. All these different variations of the first and second media streams can be combined. The memory unit can be either fixed in the device or be an easily replaceable unit, such as a memory stick or another memory unit that is connectable to or insertable in the portable communication device.

Image information can furthermore be provided within the first or second stream, as moving pictures, or a combination of both still pictures and moving pictures.

Processing of audio information from the second media stream can be more time consuming than processing of image information from the same stream, which means that image information of the second stream needs to be delayed in relation to the audio information, in order to obtain an output media stream containing synchronized information.

The second media stream may furthermore contain audio and image information coded by using any of a large number of different codes. The first and second combining units may furthermore have coding capabilities to encode the superposed audio information and the blended image information in a large number of different formats.

According to another embodiment, the first media stream is provided as a single multiplexed first media stream from a single media stream generating unit. In this case, an additional unit, a demultiplexing unit, is needed to demultiplex this multiplexed media stream, prior to the steps of combining audio information and image information separately.

Another possible variation is to execute the steps according to the method in a different order.

It is furthermore possible to form an output media stream from more than two media streams, as well as to form an output media stream having information of more than two different types. It is furthermore possible form an output media stream by combining information from multimedia streams.

According to yet another embodiment of the present invention a first and a second real time media stream are combined. In this case the second media stream is provided to the portable communication device in real time. One example of this embodiment is combining one real time media stream from a camera mounted for instance on the front of a portable device with another real time media stream from a camera mounted for instance on the back side of the same portable device. Holding the portable device in one's hand with a stretched out arm standing for instance in front of a sight-seeing spot, with the two cameras directed in different or opposite directions, enables one to combine the media stream containing audio an image information, of oneself with the second stream containing audio and image of one's current location, i.e. the sightseeing spot. It is thus easy and convenient to include oneself in a real time stream containing audio and image information, without the need of finding a second person for assistance.

With the present invention has thus been described a method and a device for forming a real time output media stream by mixing a first media stream with a second media stream.

The provision of mixing of media streams provides a number of attractive functions, for instance.

A user of a mobile device can, instead of separately sending video camera images to a communicating party, transmit a pre-recorded video or sound while mixing said pre-recorded video with voice or audio information. As this mixing is performed in real time "on the fly" the receiving party might get the impression that the user is in another location than he actually is, like for instance on a luxurious vacation resort.

This effect can be furthermore enhanced by mixing moving image information, such as the face of the user, into said pre-recorded video.

This is also applicable in other situations, when for instance the communicating party is not allowed to see the location for security reasons.

Upon receiving a video phone call the user can, instead of sending real time video camera images from his camera to the calling party, decide to play a pre-recorded video answering message, containing moving or still pictures, stored in memory. This feature can thus used as a mobile video answering machine. This can be useful since the user may not want to turn on his live video camera, when answering a VT call but still have the possibility of receiving pictures from a calling party.

During a conversation a user of the communication device can share content information such as video or still images instantly as a bearer for exchanging media files, allowing for simultaneous multimedia.

Sending of a pre-recorded video file during start up of a VT session, where said file can contain advertisements, qualifying for reduced communication tariffs.

## Claims

1. Method for forming an output media stream to be transmitted during a communication session from a portable communication device (200), wherein said media stream comprises signals of a first and a second type, comprising the steps of:
- generating in real time a first media stream in the portable communication device, said stream having signals of the first and second types (step 104),
- mixing in real time signals of the first type from the first media stream with signals of the first type from a second media stream (step 110),
- mixing signals of the second type from the first media stream with signals of the second type from the second media streams, (step 112), and
- multiplexing the mixed signals of the first type with the mixed signals of the second type for forming said output stream (step 114).

2. Method according to claim 1, further comprising the step of transmitting said output media stream (step 116).

3. Method according to claim 1, further comprising the step of establishing a connection with another device (step 102).

4. Method according to claim 3, wherein said connection is a circuit-switched connection.

5. Method according to any previous claim, in which at least one of the steps is dependent on input data from a user of said portable communication device.

6. Method according to claim 1, wherein the step of mixing further comprises the step of:
- delaying, prior to mixing, signals of one type of the second media stream (step 108), in relation to the other type of signals of the same stream, for providing synchronized signals from the second media stream within the output media stream.

7. Method according to claim 1, wherein the step of mixing further comprises independently mixing signals of the first type and signals of the second type (steps 110 and 112).

8. Method according to claim 1, wherein the step of mixing further comprises delaying signals of one type within the output media stream, in relation to the other type of signals of the same stream, for providing synchronized signals from the first media stream within the output media stream.

9. Method according to claim 1, wherein the step of mixing signals, where the signals of the first type are audio signals, further comprises the step of superposing the signals of said first type.

10. Method according to claim 9, wherein the step of superposing comprises weighting properties of the audio signals from the first media stream and the second media stream.

11. Method according to claim 1, wherein the step of mixing signals, where the signals of the first type are image signals, further comprises the step of blending the signals of the first type.

12. Method according to claim 11, wherein the step of blending comprises weighting properties of the image signals from the first media stream and the second media stream.

13. Method according to claim 10 or 12, wherein weighting properties includes varying the proportion of signals from the first media stream in relation to the proportion of signals from the second media stream.

14. Method according to claim 13, wherein the weighting properties is dependent on input data of a user of said portable communication device.

15. Method according to claim 13, wherein the varying said proportions comprises varying of each proportion within the range between 0 and 100%.

16. Portable communication device (200) for forming an output media stream to be transmitted during a communication session from said portable communication device (200), wherein said output media stream comprises signals of a first type and a second type, said portable communication device (200) comprising:
- at least one generating unit (206, 208) provided for generating a first media stream (step 104) with signals of the first and second types,
- a control unit (204) controlling the generating unit (216), in dependence of user input,
- a first mixing unit (206,208), connected to said generating unit, provided for mixing in real time the signals of the first type of the first media stream with signals of the first type of a second media stream,
- a second mixing unit (218), for mixing signals of the second type of the first media stream and signals of the second type of the second media stream, and
- a multiplexing unit (220) for multiplexing the mixed signals of the first type with the mixed signals of the second type for forming the output media stream.

17. Portable communication device (200) according to claim 16, further comprising:
- a memory unit (210) for providing storage for the second media stream.

18. Portable communication device (200) according to claim 16 or 17, further comprising:
- a user input interface (202) for providing user input.

19. Portable communication device (200) according to claim 16, wherein said multiplexing unit (220) is arranged to provide synchronization of signals of one type from the first media stream in relation to signals of the other type from the same first media stream, within the output media stream.

20. Portable communication device (200) according to any one of claims 16 - 18, further comprising:
- a delaying unit (214) for providing synchronized signals within the output media stream.

21. Portable communication device (200) according to claim 20, where the delaying unit (214) provides synchronization of signals from the second media stream, prior to mixing with the first stream.

22. Portable communication device (200) according to claim 21, where the delaying unit (214) provides synchronization of signals of one type in relation to signals of the other type from the same second media stream.

## Patentansprüche

1. Verfahren zur Bildung eines Ausgabe-Mediendatenstroms, der in einer Kommunikationssitzung von einem tragbaren Kommunikationsgerät (200) übertragen werden soll, wobei der Mediendatenstrom Signale eines ersten und eines zweiten Typs enthält, und das Verfahren folgende Schritte aufweist:
- Erzeugung eines ersten Mediendatenstroms im tragbaren Kommunikationsgerät in Echtzeit, wobei der Datenstrom Signale des ersten und zweiten Typs enthält (Schritt 104),
- Mischung von Signalen des ersten Typs aus dem ersten Mediendatenstrom in Echtzeit mit Signalen des ersten Typs aus einem zweiten Mediendatenstrom (Schritt 110),
- Mischung von Signalen des zweiten Typs aus dem ersten Mediendatenstrom mit Signalen des zweiten Typs aus dem zweiten Mediendatenstrom (Schritt 112), und
- Multiplexen der gemischten Signale des ersten Typs mit den gemischten Signalen des zweiten Typs zur Bildung des Ausgabe-Mediendatenstroms (Schritt 114).

2. Verfahren nach Anspruch 1, welches weiterhin den Schritt der Übertragung des Ausgabe-Mediendatenstroms aufweist (Schritt 116).

3. Verfahren nach Anspruch 1, welches weiterhin den Schritt des Aufbaus einer Verbindung mit einem anderen Gerät aufweist (Schritt 102).

4. Verfahren nach Anspruch 3, wobei die Verbindung leitungsvermittelt ist.

5. Verfahren nach einem der vorstehenden Ansprüche, in dem mindestens einer der Schritte von Daten abhängig ist, die von einem Nutzer des tragbaren Kommunikationsgeräts eingegeben werden.

6. Verfahren nach Anspruch 1, wobei der Schritt der Mischung weiterhin aufweist den Schritt der
- Verzögerung von Signalen des einen Typs aus dem zweiten Mediendatenstrom (Schritt 108) in Bezug auf den anderen Signaltyp aus demselben Datenstrom vor der Mischung, um synchronisierte Signale aus dem zweiten Mediendatenstrom innerhalb des Ausgabe-Mediendatenstroms bereitzustellen.

7. Verfahren nach Anspruch 1, wobei der Schritt der Mischung weiterhin die unabhängige Mischung von Signalen des ersten Typs und Signalen des zweiten Typs aufweist (Schritte 110 und 112).

8. Verfahren nach Anspruch 1, wobei der Schritt der Mischung weiterhin die Verzögerung von Signalen des einen Typs innerhalb des Ausgabe-Medienstroms in Bezug auf den anderen Signaltyp aus demselben Datenstrom aufweist, um synchronisierte Signale aus dem ersten Mediendatenstrom innerhalb des Ausgabe-Mediendatenstroms bereitzustellen.

9. Verfahren nach Anspruch 1, wobei der Schritt der Mischung von Signalen, von denen die Signale des ersten Typs Audiosignale sind, weiterhin den Schritt der Überlagerung der Signale des ersten Typs aufweist.

10. Verfahren nach Anspruch 9, wobei der Schritt der Überlagerung die Gewichtung von Eigenschaften der Audiosignale aus dem ersten Mediendatenstrom und dem zweiten Mediendatenstrom aufweist.

11. Verfahren nach Anspruch 1, wobei der Schritt der Mischung von Signalen, von denen die Signale des ersten Typs Bildsignale sind, weiterhin den Schritt der Mischung der Signale des ersten Typs aufweist.

12. Verfahren nach Anspruch 11, wobei der Schritt der Mischung die Gewichtung von Eigenschaften der Bildsignale aus dem ersten Mediendatenstrom und dem zweiten Mediendatenstrom aufweist.

13. Verfahren nach Anspruch 10 oder 12, wobei die Gewichtung von Eigenschaften die Variierung des Verhältnisses der Signale aus dem ersten Mediendatenstrom in Bezug auf das Verhältnis der Signale aus dem zweiten Mediendatenstrom aufweist.

14. Verfahren nach Anspruch 13, wobei die Gewichtung von Eigenschaften von Daten abhängig ist, die von einem Nutzer des tragbaren Kommunikationsgeräts eingegeben werden.

15. Verfahren nach Anspruch 13, wobei die Gewichtung der Verhältnisse die Variierung jedes Verhältnisses innerhalb des Bereichs von 0 bis 100% aufweist.

16. Tragbares Kommunikationsgerät (200) zur Bildung eines Ausgabe-Mediendatenstroms, der in einer Kommunikationssitzung vom tragbaren Kommunikationsgerät (200) übertragen werden soll, wobei der Ausgabe-Mediendatenstrom Signale eines ersten und eines zweiten Typs enthält, und das tragbare Kommunikationsgerät (200) aufweist:
- mindestens eine Erzeugereinheit (206, 208) zur Erzeugung eines ersten Mediendatenstroms (Schritt 104), welcher Signale des ersten und zweiten Typs enthält,
- eine Steuereinheit (204) zur Steuerung der Erzeugereinheit (206, 208) in Abhängigkeit von Nutzereingaben,
- eine erste mit der Erzeugereinheit verbundene Mischeinheit (216) zur Mischung von Signalen des ersten Typs aus dem ersten Mediendatenstrom in Echtzeit mit Signalen des ersten Typs aus einem zweiten Mediendatenstrom,
- eine zweite Mischeinheit (218) zur Mischung von Signalen des zweiten Typs aus dem ersten Mediendatenstrom und Signalen des zweiten Typs aus dem zweiten Mediendatenstrom, und
- eine Multiplexereinheit (220) zum Multiplexen der gemischten Signale des ersten Typs aus dem ersten Mediendatenstrom mit den gemischten Signalen des zweiten Typs zur Bildung des Ausgabe-Mediendatenstroms.

17. Tragbares Kommunikationsgerät (200) nach Anspruch 16, welches weiterhin aufweist:
- eine Speichereinheit (210) zur Bereitstellung von Speicherplatz für den zweiten Mediendatenstrom.

18. Tragbares Kommunikationsgerät (200) nach Anspruch 16 oder 17, welches weiterhin aufweist:
- eine Nutzereingabeschnittstelle (202) für Nutzereingaben.

19. Tragbares Kommunikationsgerät (200) nach Anspruch 16, wobei die Multiplexereinheit (220) Signale des einen Typs aus dem ersten Mediendatenstrom in Bezug auf Signale des anderen Typs aus demselben ersten Mediendatenstrom innerhalb des Ausgabe-Mediendatenstroms synchronisieren kann.

20. Tragbares Kommunikationsgerät (200) nach einem der Ansprüche 16-18, welches weiterhin aufweist:
- eine Verzögerungseinheit (214) zur Bereitstellung synchronisierter Signale innerhalb des Ausgabe-Mediendatenstroms.

21. Tragbares Kommunikationsgerät (200) nach Anspruch 20, in dem die Verzögerungseinheit (214) Signale aus dem zweiten Mediendatenstrom vor der Mischung mit dem ersten Datenstrom synchronisiert.

22. Tragbares Kommunikationsgerät (200) nach Anspruch 21, in dem die Verztigerungseinheit (214) Signale des einen Typs in Bezug auf Signale des anderen Typs aus demselben zweiten Mediendatenstrom synchronisiert.

## Revendications

1. Procédé pour former un flux de média de sortie devant être transmis durant une session de communication depuis un dispositif de communication portable (200), dans lequel ledit flux de média comprend des signaux de premier et second types, comprenant les étapes qui consistent :
- à générer en temps réel un premier flux de média dans le dispositif de communication portable, ledit flux ayant des signaux des premier et second types (étape 104),
- à mélanger en temps réel des signaux du premier type provenant du premier flux de média avec des signaux du premier type provenant d'un second flux de média (étape 110),
- à mélanger des signaux du second type provenant du premier flux de média avec des signaux du second type provenant du second flux de média (étape 112), et
- à multiplexer les signaux mélangés du premier type avec des signaux mélangés du second type pour former ledit flux de sortie (étape 114).

2. Procédé selon la revendication 1, comprenant en outre l'étape d'émission dudit flux de média de sortie (étape 116).

3. Procédé selon la revendication 1, comprenant en outre l'étape d'établissement d'une connexion avec un autre dispositif (étape 102).

4. Procédé selon la revendication 3, dans lequel ladite connexion est une connexion par circuits commutés.

5. Procédé selon l'une quelconque des revendications précédentes, dans lequel au moins l'une des étapes dépend de données d'entrée provenant d'un utilisateur dudit dispositif de communication portable.

6. Procédé selon la revendication 1, dans lequel l'étape de mélange comprend en outre l'étape consistant :
- à retarder, avant le mélange, des signaux d'un type du second flux de média (étape 108), par rapport à l'autre type de signaux du même flux, pour produire des signaux synchronisés à partir du second flux de média dans le flux de média de sortie.

7. Procédé selon la revendication 1, dans lequel l'étape de mélange comprend en outre le mélange indépendant de signaux du premier type et de signaux du second type (étapes 110 et 112).

8. Procédé selon la revendication 1, dans lequel l'étape de mélange comprend en outre le fait de retarder des signaux d'un type dans le flux de média de sortie, par rapport à l'autre type de signaux du même flux, pour produire des signaux synchronisés à partir du premier flux de média dans le flux de média de sortie.

9. Procédé selon la revendication 1, dans lequel l'étape de mélange de signaux, où les signaux du premier type sont des signaux audio, comprend en outre l'étape de superposition des signaux dudit premier type.

10. Procédés selon la revendication 9, dans lequel l'étape de superposition comprend la pondération de propriétés des signaux audio provenant du premier flux de média et du second flux de média.

11. Procédé selon la revendication 1, dans lequel l'étape de mélange de signaux, où les signaux du premier type sont des signaux d'image, comprend en outre l'étape de réunion des signaux du premier type.

12. Procédé selon la revendication 11, dans lequel l'étape de réunion comprend la pondération de propriétés des signaux d'image provenant du premier flux de média et du second flux de média.

13. Procédé selon la revendication 10 ou 12, dans lequel la pondération de propriétés comprend le fait de faire varier la proportion de signaux provenant du premier flux de média par rapport à la proportion de signaux provenant du second flux de média.

14. Procédé selon la revendication 13, dans lequel la pondération des propriétés dépend de données d'entrée d'un utilisateur dudit dispositif de communication portable.

15. Procédé selon la revendication 13, dans lequel la variation desdites proportions comprend le fait de faire varier chaque proportion dans la plage comprise entre 0 et 100 %.

16. Dispositif de communication portable (200) destiné à former un flux de média de sortie devant être émis durant une session de communication depuis ledit dispositif de communication portable (200), dans lequel ledit flux de média de sortie comprend des signaux d'un premier type et d'un second type, ledit dispositif de communication portable (200) comportant :
- au moins une unité de génération (206, 208) prévue pour générer un premier flux de média (étape 104) avec des signaux des premier et second types,
- une unité de commande (204) commandant l'unité de générations (206, 208) en fonction d'une entrée d'utilisateur,
- une première unité de mélange (216) connectée à ladite unité de génération, prévue pour mélanger en temps réel les signaux du premier type du premier flux de média avec des signaux du premier type d'un second flux de média,
- une seconde unité de mélange (218) destinée à mélanger des signaux du second type du premier flux de média et des signaux du second type du second flux de média, et
- une unité de multiplexage (220) destinée à multiplexer les signaux mélangés du premier type avec les signaux mélangés du second type pour former le flux de média de sortie.

17. Dispositif de communication portable (200) selon la revendication 16, comportant en outre :
- une unité de mémoire (210) destinée à réaliser un stockage pour le second flux de média.

18. Dispositif de communication portable (200) selon la revendication 16 ou 17, comportant en outre :
- une interface d'entrée d'utilisateur (202) destinée à fournir une entrée d'utilisateur.

19. Dispositif de communication portable (200) selon la revendication 16, dans lequel ladite unité de multiplexage (220) est agencée pour réaliser une synchronisation de signaux d'un type provenant du premier flux de média par rapport à des signaux de l'autre type provenant du même premier flux de média, dans le flux de média de sortie.

20. Dispositif de communication portable (200) selon l'une quelconque des revendications 16 à 18, comportant en outre :
- une unité à retard (214) destinée à produire des signaux synchronisés dans le flux de média de sortie.

21. Dispositif de communication portable (200) selon la revendication 20, dans lequel l'unité à retard (214) réalise une synchronisation de signaux provenant du second flux de média, avant le mélange avec le premier flux.

22. Dispositif de communication portable (200) selon la revendication 21, dans lequel l'unité à retard (214) réalise une synchronisation de signaux d'un type par rapport à des signaux de l'autre type provenant du même second flux de média.
